# FASCICULE DE BREVET EUROPEEN

(11) **EP 3 785 803 B1**
(45) Date de publication et mention de la délivrance du brevet: **16.03.2022**
(21) Numéro de dépôt: 20193822.2
(22) Date de dépôt: 01.09.2020
(51) Int. Cl.: B05B 1/30, F16K 31/122, F16K 31/46, F16K 51/00, B25B 13/06, B25B 23/10

(54) **VANNE ET SYSTÈME D'APPLICATION DE PRODUIT DE REVÊTEMENT COMPRENANT UNE TELLE VANNE**
VENTIL UND SYSTEM ZUR AUFTRAGUNG EINES BESCHICHTUNGSPRODUKTS, DAS EIN SOLCHES VENTIL UMFASST
VALVE AND SYSTEM FOR APPLYING A COATING PRODUCT COMPRISING SUCH A VALVE

(30) Priorité: 02.09.2019 FR 1909623
(43) Date de publication de la demande: 03.03.2021
(73) Titulaire: Exel Industries, 51200 Epernay (FR)
(72) Inventeur: VANZETTO, Denis, 75009 PARIS (FR); FAURE, Didier, 75009 PARIS (FR); GOURBAT, Olivier, 75009 PARIS (FR)
(74) Mandataire: Lavoix

(56) Documents cités:
- DE-A1- 3 005 329
- FR-A1- 2 863 512
- JP-A- 2010 207 666

## Description

La présente invention concerne une vanne et un système d'application de produit de revêtement comprenant une telle vanne.

Les systèmes d'application de produits de revêtement, tels que les pulvérisateurs de peinture, comprennent au moins une vanne contrôlant un pointeau manœuvrable pour autoriser la circulation de peinture. La vanne est généralement contrôlée par injection d'air pressurisé de commande dans une chambre. L'air sous pression agit sur un piston contrôlant le pointeau. Une telle vanne comporte des dispositifs d'étanchéité empêchant d'un côté, la peinture d'entrer dans la vanne vers la chambre, et d'un autre côté, l'air pressurisé de commande de s'échapper de la chambre et l'entrée d'autres fluides dans la chambre.

De telles vannes sont équipées d'un évent, c'est-à-dire un canal qui permet, dans le cas d'une vanne qui se met à fuir au niveau de l'étanchéité côté peinture, de diriger la peinture vers l'extérieur du pulvérisateur et surtout d'éviter que de la peinture n'entre dans le circuit d'air de commande afin de protéger la partie commande de la vanne. Les évents permettent aussi de localiser une vanne qui fuit.

Sur certaines vannes actuelles, un perçage est réalisé dans le corps de la vanne pour diriger la peinture sur l'extérieur de la vanne, puis via un lamage et un perçage dans le corps du pulvérisateur, vers l'extérieur du pulvérisateur. Le document FR 2 863 512 décrit un pistolet automatique de pulvérisation muni d'un pointeau.

Ce type d'évent peut occasionner des dommages sur les pulvérisateurs en raison des éventuels résidus de peinture séchée après une fuite, qui peuvent boucher les évents dans le corps du pulvérisateur.

C'est à ces inconvénients qu'entend remédier l'invention en proposant une nouvelle vanne pour un système d'application de produit de revêtement, sur laquelle l'évent est réalisé de manière à éviter les dommages sur le système d'application de produit de revêtement.

A cet effet, l'invention concerne une vanne pour un système d'application de produit de revêtement, cette vanne comprenant un corps comprenant un orifice central interne et une chambre, la vanne comprenant également un piston formé par une tige montée dans l'orifice interne et par une tête de piston montée dans la chambre, la tige se prolongeant hors du corps et étant destinée à se déplacer dans un alésage du système d'application dans lequel la vanne est destinée à être montée et dans laquelle circule le produit de revêtement sous pression ou un autre fluide, la vanne comprenant un premier dispositif d'étanchéité formé par un joint dynamique logé dans le corps autour de la tige de piston d'un côté de la vanne où la tige de piston se prolonge hors du corps, une partie de la chambre étant destinée à être remplie d'un fluide de commande sous pression de manière à obtenir, à l'encontre de l'effort d'un ressort logé dans le corps, le déplacement du piston, la vanne comportant un second dispositif d'étanchéité formé par un joint dynamique logé dans le corps autour de la tige de piston entre le premier dispositif d'étanchéité et la chambre. Cette vanne est caractérisée en ce qu'elle comprend un conduit d'évent prévu dans la tige du piston et communicant avec l'orifice central interne entre le premier dispositif d'étanchéité et le deuxième dispositif d'étanchéité et débouchant à l'air libre ou dans une partie de la chambre communiquant avec l'air libre.

Grâce à l'invention, la fonction évent de la vanne est réalisée en interne à la vanne. En cas de fuite de la vanne côté peinture, il suffit alors de changer la vanne, et les problèmes des évents connus, notamment les bouchages dans le corps du système d'application, sont évités, ce qui réduit les opérations de maintenance. Le coût global du système d'application de produit est également réduit.

Selon des aspects avantageux mais non obligatoires de l'invention, une telle vanne peut incorporer une ou plusieurs des caractéristiques suivantes, prises selon toute combinaison techniquement admissible :
- Le conduit d'évent comprend au moins un orifice radial débouchant dans une cavité de l'orifice central interne située axialement entre le premier dispositif d'étanchéité et le deuxième dispositif d'étanchéité.
- La vanne comprend un témoin solidaire du piston configuré pour faire saillie hors du corps en fonction d'une position du piston, et le conduit d'évent traverse le témoin.
- Le conduit d'évent est coaxial à un axe central du piston.
- Le condit d'évent débouche dans la partie de la chambre communiquant avec l'air libre, et dans laquelle est monté le ressort.
- La vanne comprend un conduit traversant le corps entre une surface externe du corps et la cavité de l'orifice central interne située axialement entre le premier dispositif d'étanchéité et le deuxième dispositif d'étanchéité de manière à canaliser vers le conduit d'évent une fuite d'un élément d'étanchéité statique interposé entre le corps et l'alésage.

L'invention concerne également un système d'application d'un produit de revêtement comprenant une vanne telle que mentionnée ci-dessus.

L'invention sera mieux comprise et d'autres avantages de celle-ci apparaîtront plus clairement à la lumière de la description qui va suivre d'une vanne et d'un système d'application de produit de revêtement conformes à son principe, faite à titre d'exemple non limitatif et en référence aux dessins dans lesquels :
[Fig 1] La figure 1 présente une vue en coupe d'une vanne conforme à l'invention montée dans un système de pulvérisation conforme à l'invention.
[Fig 2] La figure 2 est une vue en coupe similaire à la figure 1 montrant une variante de la vanne de la figure 1.
[Fig 3] La figure 3 est une vue en perspective de la vanne de la figure 1 et d'un outil conforme à l'invention ;
[Fig 4] La figure 4 est une vue en perspective de la vanne selon un angle opposé par rapport à la figure 3 ;
[Fig 5] La figure 5 est une coupe longitudinale de la vanne et de l'outil tels que présentés à la figure 3;
[Fig 6] La figure 6 est une coupe longitudinale de la vanne en prise dans l'outil dans une configuration de montage;
[Fig 7] La figure 7 est une coupe transversale de l'outil et de la vanne selon le plan VII ;
[Fig 8] La figure 8 est une coupe transversale de la vanne et de l'outil assemblés selon le plan VIII à la figure 9;
[Fig 9] La figure 9 est une coupe longitudinale selon le plan IX de la vanne et de l'outil assemblés.

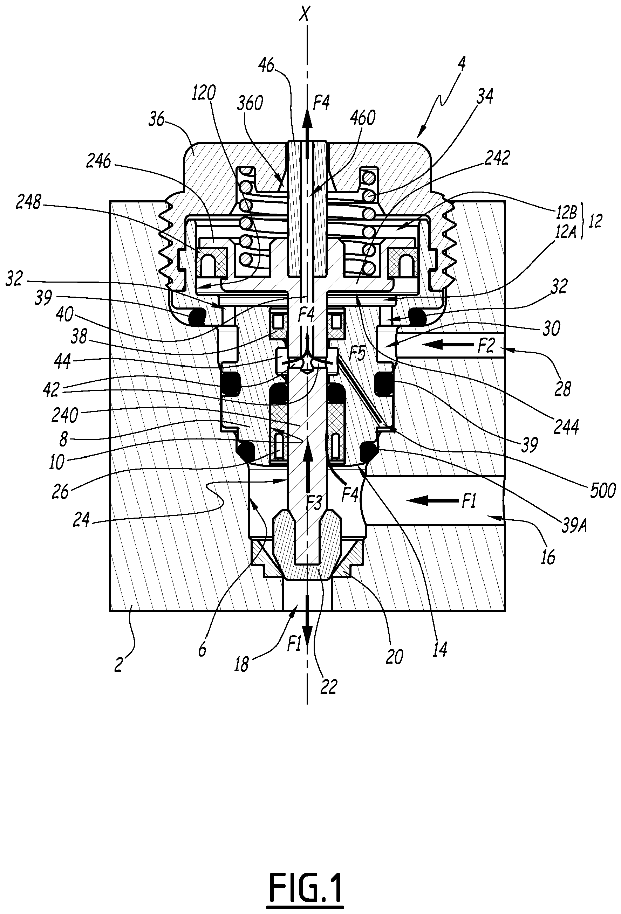

La figure 1 représente une partie d'un système d'application 2 produit de revêtement, par exemple d'un pulvérisateur de peinture, de vernis, de revêtement anticorrosion, ou de tout autre type de produit envisageable. Le système 2 comprend une vanne 4 montée dans un alésage 6 du système 2.

La vanne 4 comprend un corps 8 comprenant un orifice central interne 10 et une chambre 12. L'orifice 10 et la chambre 12 sont centrés autour d'un axe central X. Dans ce qui suit, les termes « axial », « radial », « axialement », « radialement » sont employées en référence à l'axe central X.

L'orifice 10 et la chambre 12 communiquent fluidiquement. L'orifice 10 débouche du corps 8 au niveau d'une face d'extrémité 14 du corps 8, dans l'alésage 6.

Le système 2 comporte un conduit d'arrivée 16 de fluide dans l'alésage 6, et un conduit de sortie 18 de fluide qui prolonge l'orifice 6. Dans certaines applications, le conduit d'arrivée et le conduit de sortie peuvent être inversés. Le conduit d'arrivée 16 et le conduit de sortie 18 sont principalement destinés à la circulation du produit de revêtement, mais d'autres fluides, notamment de l'air ou du solvant de nettoyage, peuvent également circuler dans le conduit d'arrivée 16 et le conduit de sortie 18.

Entre le conduit d'arrivée 16 et le conduit de sortie 18, l'alésage 6 comporte un siège 20, contre lequel vient coopérer un pointeau 22 de la vanne 4 de manière à fermer ou autoriser la circulation du produit de revêtement du conduit d'arrivée 16 vers le conduit de sortie 18, selon les flèches F1. En variante non représentée, le siège 20 peut également être usiné directement dans la matière du système d'application 2. Le conduit d'arrivée 16 est relié à un réservoir de produit de revêtement non représenté, ou bien à une pompe, notamment de type « circulating », et le conduit de sortie 18 est relié à un dispositif d'application ou de pulvérisation non représenté, tel qu'un pistolet.

La vanne 4 comprend un piston 24 formé par une tige 240 montée dans l'orifice interne 10 et par une tête de piston 242 logée dans la chambre 12. La tige 240 se prolonge hors du corps 8 et porte le pointeau 22. La tige 240 est destinée à se déplacer en translation selon l'axe central X dans l'alésage 6 dans lequel circule le produit de revêtement sous pression selon les flèches F1.

La vanne 4 comporte un premier dispositif d'étanchéité 26 logé dans le corps 8 autour de la tige de piston 240 du côté de la vanne 4 où la tige 240 se prolonge hors du corps 8. Le premier dispositif d'étanchéité 26 est un joint dynamique permettant d'empêcher l'infiltration de produit de revêtement entre la tige de piston 240 et le corps 8 en direction de la chambre 12, durant les mouvements de translation de la tige de piston 240.

La tête de piston 242 présente une surface axiale 244 perpendiculaire à l'axe central X. La tête de piston 242 se prolonge radialement en une collerette 246 dans laquelle est logé un dispositif d'étanchéité 248, qui garantit une étanchéité dynamique entre la tête de piston 242 et une paroi cylindrique interne 120 de la chambre 12, lors de déplacements en translation de la tête de piston 242 dans la chambre 12. Le dispositif d'étanchéité 246 divise la chambre 12 en deux parties 12A et 12B qui sont isolées fluidiquement du fait que le dispositif d'étanchéité 246 empêche la circulation de fluide autour de la tête de piston 242 entre la partie 12A et la partie 12B.

La partie 12A de la chambre 12 est située du côté de la tige de piston 240. La surface axiale 244 est située dans la partie 12A. Le système de pulvérisation 2 comporte un conduit d'arrivée 28 d'un fluide de commande sous pression, qui débouche dans une gorge périphérique 30 du corps 8. La gorge périphérique 30 communique avec la partie 12A par des orifices axiaux 32. La partie 12A de la chambre 12 est destinée à être remplie par le fluide de commande sous pression, par exemple de l'air, de manière à commander le déplacement axial du piston 24. La vanne 4 comprend un ressort 34 monté dans la partie 12B de la chambre 12. Le ressort 34 est centré sur l'axe central X et exerce un effort élastique sur la tête de piston 242 de manière à entraîner celle-ci vers le bas, c'est-à-dire à l'enfoncer dans la partie 12A. Le ressort 34 est en appui contre une partie de la tête de piston 242 et contre un bouchon 36 de la vanne 4, qui est fixé au corps 8 et vissé dans le système d'application 2.

Sous l'action de commande de l'air comprimé injecté dans la partie 12A via le conduit 28 (flèche F2), le piston 24 est déplacé vers le haut (flèche F3) par la force exercée par la pression de l'air pressurisé sur la surface axiale 244, à l'encontre de l'effort du ressort 34. Cela a pour effet de soulever le pointeau 22 du siège 20 et d'autoriser le passage de produit de revêtement vers le conduit de sortie 18.

La vanne 4 comporte un second dispositif d'étanchéité 38 logé dans le corps 8 autour de la tige de piston 240, entre le premier dispositif d'étanchéité 26 et la chambre 12. Ce dispositif d'étanchéité 38 est un joint dynamique qui empêche la sortie d'air de la chambre 12 lors de la translation de la tige de piston 240, ainsi que l'entrée d'autres fluides dans la partie 12A, le circuit d'air pressurisé de commande devant impérativement être préservé de toute intrusion de fluide extérieur, notamment de produit de revêtement.

La vanne 4 comprend également plusieurs dispositifs d'étanchéité statique assurant une étanchéité entre l'alésage 6 et le corps 8. Ces dispositifs sont formés par des joints toriques 39 logés dans des gorges du corps 8 et qui s'appuient contre l'alésage 6, notamment un joint torique 39A assurant l'étanchéité entre l'alésage 6 et le corps 8 autour de la face d'extrémité 14.

Dans le cas où le premier dispositif d'étanchéité 26 subirait une défaillance, pouvant provoquer une fuite et l'afflux de produit de revêtement en direction de la chambre 12, la vanne 4 comprend un conduit d'évent 40 permettant d'évacuer le produit de revêtement qui a fui vers un emplacement éloigné de la partie 12A de la chambre 12.

Le conduit d'évent 40 est prévu dans la tige de piston 240 et communique avec l'orifice central interne 10 entre le premier dispositif d'étanchéité 26 et le deuxième dispositif d'étanchéité 38 et débouche à l'air libre ou dans une partie de la chambre 12 communiquant avec l'air libre. Le conduit d'évent 40 est formé par un conduit englobé dans la matière formant la tige de piston 240. Ainsi, l'évent 40 est prévu dans la vanne 4 elle-même, ce qui ne nécessite pas de canal d'évent dans le système d'application 2. La vanne défectueuse peut être changée sans qu'il soit nécessaire d'intervenir sur le système d'application.

Dans un mode de réalisation, le conduit d'évent 40 est coaxial à l'axe central X du piston 24. Le conduit d'évent 40 comprend au moins un orifice radial 42 débouchant dans une cavité 44 de l'orifice central interne 10, située axialement entre le premier dispositif d'étanchéité 26 et le deuxième dispositif d'étanchéité 38. Ainsi, une éventuelle fuite de produit de revêtement passant à travers le premier dispositif d'étanchéité 26 s'accumule dans la cavité 44 puis rejoint le conduit d'évent 40 via les orifices radiaux 42, selon les flèches F4. Le conduit d'évent 40 peut comprendre plusieurs orifices radiaux 42 répartis autour de l'axe central X.

La vanne 4 comprend un témoin 46, formé par une pièce solidaire du piston 24 et configurée pour faire saillie hors du corps 8 en fonction de la position axiale du piston 24. Le témoin 46 est une pièce cylindrique coaxiale à l'axe central X, fixée à la tête de piston 242, et qui est insérée dans un trou 360 du bouchon 36. Lorsque le piston 24 est poussé vers le haut sous l'action de l'air comprimé de commande, le témoin 46 fait saillie hors du bouchon 36 et est visible de l'extérieur.

Dans l'exemple représenté, le conduit d'évent 40 se prolonge en un perçage 460 qui traverse le témoin 46, et le produit de revêtement qui a fui par le conduit d'évent 40 est donc expulsé à l'air libre selon les flèches F4. En cas de défaillance du premier dispositif d'étanchéité 26, une fuite de produit de revêtement est donc évacuée à l'air libre à travers la tige de piston 240 puis le témoin 46, c'est-à-dire des composants de la vanne 4, et sans passer par le système de pulvérisation 2. Celuici ne nécessite pas d'évent spécifique qu'il faudrait nettoyer en cas de fuite. En outre, le produit de revêtement est dirigé via l'évent 40 à l'écart de la partie 12A pour éviter une contamination du circuit d'air de commande.

Selon une variante non représentée, le conduit d'évent 40 peut ne pas être coaxial à l'axe central X.

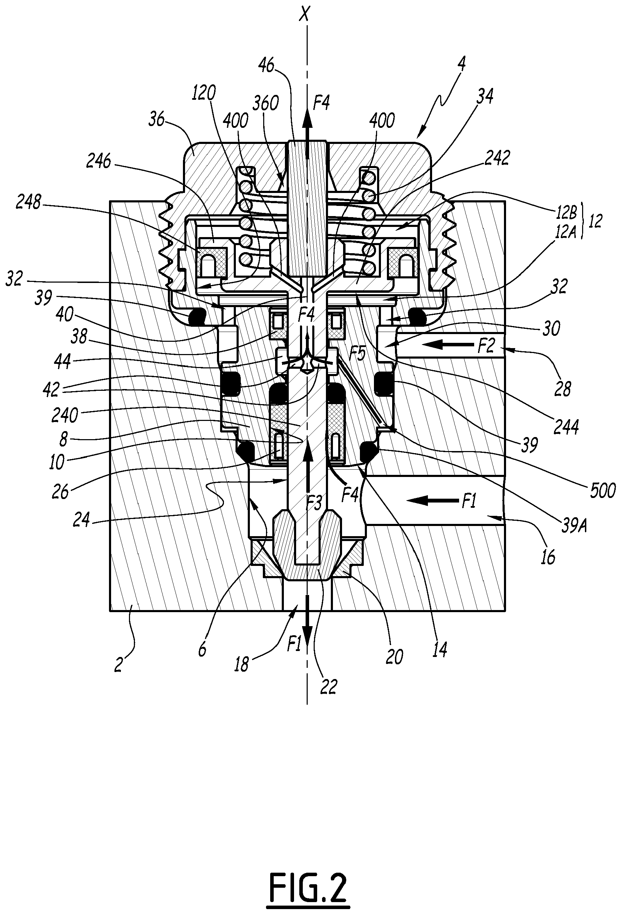

Selon une autre variante représentée sur la figure 2, le conduit d'évent 40 peut ne pas traverser le témoin 46 pour expulser le produit de revêtement à l'air libre. Par exemple, le conduit d'évent 40 peut suivre un cheminement interne à la tige de piston 240 et à la tête de piston 242, par des conduits 400, qui débouchent dans la partie 12B de la chambre 12. La partie 12B communique avec l'air libre via le trou 360 du bouchon 36, à travers lequel le témoin 46 coulisse selon l'axe central X. Le produit de revêtement peut donc être évacué de la partie 12B via le trou 360. Une certaine quantité de produit de revêtement qui a fui peut s'accumuler autour du témoin 46 et du ressort 34, et avantageusement bloquer la vanne 4 en position fermée. La partie 12A reste protégée de la fuite de produit de revêtement par le dispositif d'étanchéité dynamique 248. Le blocage de la vanne 4 en position fermée a pour effet de rapidement signaler un dysfonctionnement de la vanne 4.

Selon une variante non représentée, le témoin 46 peut également ne pas être coaxial à l'axe central X. Le témoin 46 peut également ne pas être une pièce distincte du piston 24. Le témoin et le piston 24 peuvent être venus de matière et former une pièce monobloc entièrement traversée par le conduit d'évent 40 entre les orifices radiaux 42 et l'air libre au niveau du bouchon 36.

Selon un aspect optionnel, la vanne 4 peut comprendre un perçage 500 traversant le corps 8 entre l'alésage 6 et la cavité 44. L'ouverture du perçage 500 est prévue en arrière du joint 39A par rapport à la face d'extrémité 14. Ainsi, en cas de problème d'étanchéité au niveau du joint 39A, une fuite entre une surface externe du corps 8 et l'alésage 6 est canalisée par le perçage 500 et dirigée vers la cavité 44, selon la flèche F5, puis vers les orifices radiaux 42 et le conduit d'évent 40.

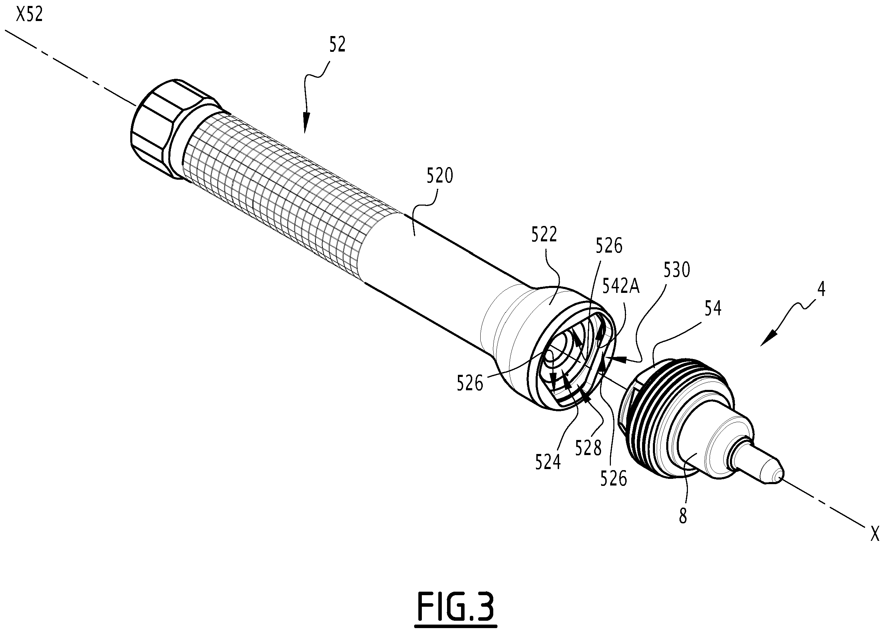

Un aspect supplémentaire de la vanne 4, un outil 52 de montage et démontage de la vanne 4 et le fonctionnement de cet outil 52 sont décrits en référence aux figures 3 à 9.

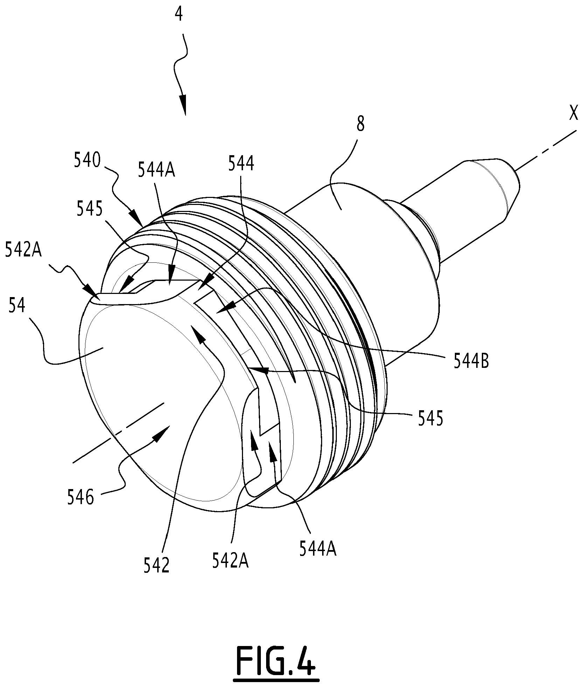

La vanne 4 comporte des formes en saillie ou en creux sur une partie périphérique, configurées pour coopérer avec des formes en saillie ou en creux de l'outil 52. Ces formes en saillie ou en creux sont configurées pour transmettre un mouvement de rotation à la vanne 4, et pour se solidariser à l'outil 52 lors d'un démontage de la vanne 4. La partie périphérique est formée par un bouchon 54 de forme particulière représenté à la figure 4, et dont la fonction primaire est similaire à celle du bouchon 36 de la figure 1 : le bouchon 54 est fixé au corps 8 et vissé dans le système d'application 2. Le bouchon 54 comporte à cet effet un filetage externe 540.

Les formes en saillie ou en creux prévues sur le bouchon 54 comprennent un profil périphérique 542 et un profil périphérique 544, situé en arrière du profil périphérique 542 par rapport à une extrémité externe 546 de la vanne 4 portée par une surface axiale du bouchon 54. Les profils périphériques 542 et 544 sont étagés selon l'axe X, le profil périphérique 542 se trouvant le plus près de l'extrémité 546.

Le profil périphérique 542 présente trois surfaces planes 542A, qui s'étendent parallèlement à l'axe X, et forment des ruptures de la forme cylindrique du bouchon 54. Le profil périphérique 544 comprend trois surfaces planes 544A alignées avec les trois surfaces planes 542A du profil périphérique 542, et trois surfaces planes 544B décalées angulairement par rapport aux trois surfaces planes 542A. Par « alignées », on entend que les surfaces planes 544A se situent au moins partiellement dans le prolongement selon l'axe X des surfaces planes 542A et forment un même plan. Par « décalées angulairement » on entend que les surfaces 544B se situent dans des secteurs angulaires décalés par rapport aux secteurs angulaires sur lesquels s'étendent les surfaces planes 542A, de telle sorte que les plans respectifs formés par les surfaces planes 542A et 544B sont sécants. Ce décalage angulaire permet que les surfaces planes 544B forment des épaulements axiaux 545 en creux par rapport au profil périphérique 542. Comme on le voit sur la figure 4, les surfaces planes 544B se trouvent en retrait de la partie cylindrique du profil périphérique 542.

L'outil 52 comporte des formes en saillie ou en creux sur une partie périphérique, configurées pour coopérer avec les formes en saillie ou en creux prévues sur le bouchon de la vanne 4. Ces formes en saillie ou en creux de l'outil 52 sont configurées pour transmettre un mouvement de rotation à la vanne 4, et pour se solidariser à la vanne 4, lors d'un montage ou démontage de la vanne 4.

L'outil 52 s'étend selon un axe central X52 et comprend un manche 520 et un embout 522 présentant un alésage 524. Les formes en saillie ou en creux de l'outil 52 sont prévues sur une surface périphérique interne 524A de l'alésage 524. La surface périphérique interne 524A comporte trois surfaces périphériques planes 526, en nombre égal au nombre de surfaces planes 542A du profil périphérique 542 de la vanne 4. Les surfaces planes 526 sont parallèles à l'axe X52 de la même manière que les surfaces 542A sont parallèles à l'axe X. La surface périphérique 524A comporte également une gorge 528 en retrait radial des surfaces périphériques planes 526. La gorge 528 est située en arrière des surfaces planes 526 par rapport à une extrémité avant 530 de l'outil 52. La gorge 528 forme un épaulement 527 axial configuré pour recevoir une partie de la vanne 4 en solidarisant la vanne 4 avec l'outil 52.

La gorge 528 comporte un élément élastique 529 qui exerce, lorsque la vanne 4 est reçue dans l'outil 52, une force élastique orientée selon l'axe X52 contre la partie de la vanne 4 reçue dans la gorge 528. Cet élément élastique 529 peut être par exemple un joint torique. En variante non représentée, cet élément élastique peut également être un ressort spiral ou une rondelle ressort (rondelle Belleville).

En variante non représentée, le profil périphérique 542 peut comprendre un nombre différent de surfaces planes, de façon plus générale au moins une surface plane. De même, le profil périphérique 544 peut présenter un nombre de surfaces planes alignées avec les surfaces planes du profil périphérique 542 différent de trois, plus généralement au moins une, et au moins une surface plane décalée angulairement par rapport à la ou les surfaces planes du profil périphérique 542. De même que pour les surfaces planes des profils périphériques 542 et 544, l'outil 52 peut présenter un nombre de surfaces planes 526 différent de trois, plus généralement au moins une surface plane.

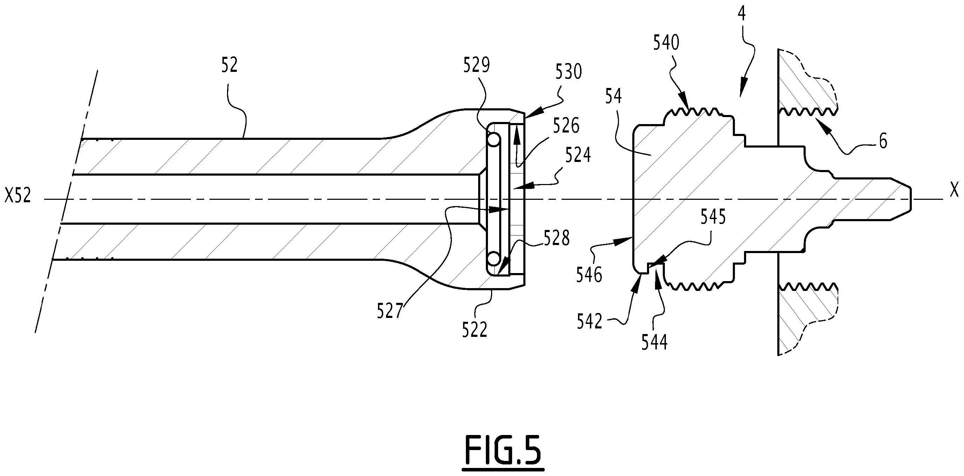

Le fonctionnement de l'outil 52 avec la vanne 4 est décrit ci-après. Les figures 5, 6 et 7 représentent le montage de la vanne 4 dans son logement. La vanne 4 est positionnée dans son alésage 6, puis l'outil 52 est approché de la vanne 4 de manière que les axes X et X52 soient confondus (figure 5).

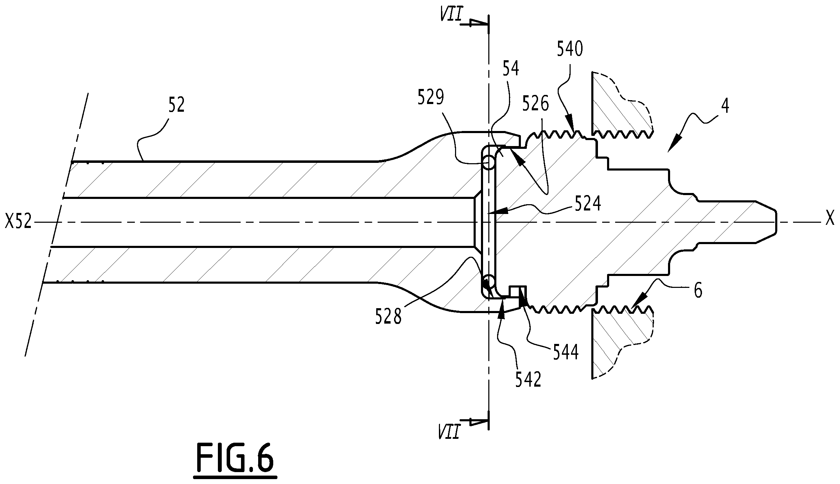

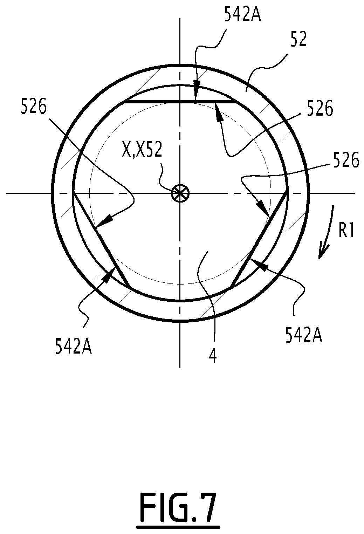

Lorsque l'embout 522 est enfoncé sur le bouchon 54 (figure 6) de manière que le profil périphérique 542 soit au moins en partie aligné axialement avec les surfaces planes 526, les surfaces planes 542A et 544A coopèrent par contact plan avec les surfaces planes 526 (figure 7, sur laquelle l'élément élastique 529 est omis). En imprimant un mouvement rotatif de vissage selon la flèche R1 à l'outil 52, un opérateur peut donc visser la vanne 4 dans l'alésage 6.

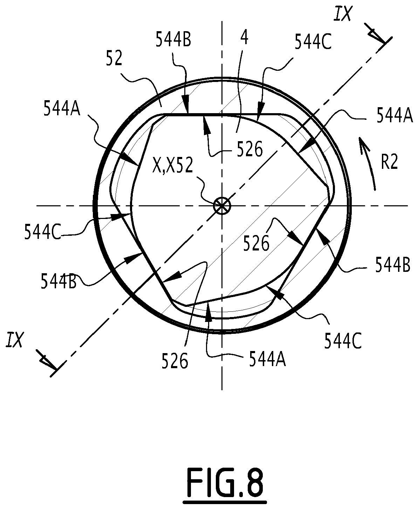

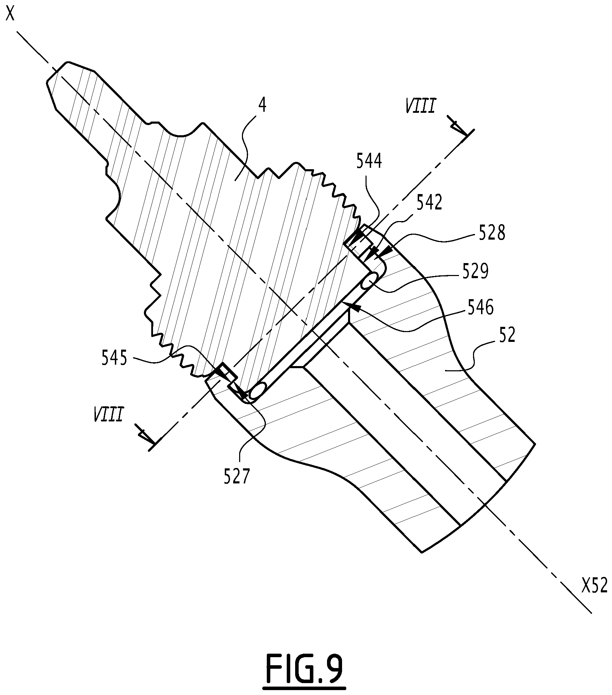

Lorsque l'opérateur souhaite dévisser la vanne 4 et l'extraire, il enfonce l'outil 52 plus profondément, de manière que l'élément élastique 529 soit écrasé. Le profil périphérique 542 se retrouve en alignement axial avec la gorge 528 (figure 9). Ensuite l'opérateur exerce une rotation dans le sens du dévissage selon la flèche R2, de manière que les surfaces 526 pivotent autour de l'axe X jusqu'à se trouver en contact plan avec les surfaces planes 544B (figure 8). Cette rotation est permise par le fait que le profil périphérique 544 présente, à la jointure des surfaces planes 544A et 544B, des surfaces arrondies 544C qui autorisent la rotation dans le sens du dévissage.

Dans cette configuration, le profil périphérique 542 se retrouve bloqué dans la gorge 528 par l'insertion des surfaces planes 526 de l'outil 52 dans les reliefs en retrait formés par le profil périphérique 544. Les épaulements 527 de l'outil 52 s'opposent alors axialement aux épaulements 545 de la vanne 4 et empêchent le retrait de l'outil 52 de la vanne 4. La force élastique exercée par l'élément élastique 529 tend à repousser la vanne 4 hors de l'alésage 544 et verrouille donc le contact entre les épaulements 527 et 545. La vanne 4 et l'outil 52 forment alors un ensemble solidaire. La vanne 4 et l'outil 52 forment un assemblage « à baïonnette ».

En poursuivant la rotation dans le sens du dévissage, l'opérateur exerce un contact plan entre les surfaces 526 et 544B qui permet de dévisser la vanne 4. Une fois dévissée de l'alésage 6, la vanne 4 peut être facilement extraite, même d'un emplacement difficile d'accès, car la vanne 4 reste accrochée à l'embout 522 de l'outil 52. La vanne 4 reste solidaire de l'outil 52 et ne risque pas de tomber.

Cette possibilité d'accrochage de la vanne 4 à l'embout 522 peut également être utilisée lors du montage de la vanne 4 dans un emplacement difficile d'accès. L'opérateur peut fixer la vanne 4 à l'outil 52 préalablement au montage, en l'enfonçant dans l'alésage 524 puis en la tournant dans le sens du dévissage. Après avoir monté la vanne 4 dans son alésage 6, l'opérateur tourne alors l'outil 52 dans le sens du vissage. La vanne 4 va alors tourner librement et se visser jusqu'à que le vissage se fasse avec résistance. Le couple de rotation de l'outil 52 vainc alors la force exercée par l'élément élastique et l'outil 52 tourne par rapport à la vanne 4 jusqu'à obtenir la coopération des surfaces 526 avec les surfaces 542A et 544A. Le vissage peut alors être poursuivi jusqu'au verrouillage.

L'outil 52 et les reliefs en creux/saillie prévus sur la vanne 4 permettent donc d'utiliser un même outil pour le montage et de démontage de la vanne. Les moyens permettant le montage et le démontage étant prévus tous les deux sur un seul embout 522 de l'outil 52, il n'est pas nécessaire de le tourner pour effectuer l'une ou l'autre opération. La possibilité de solidariser la vanne 4 et l'outil 52 par un montage à baïonnette permet de facilement monter ou démonter la vanne 4 dans des emplacements difficiles d'accès. Le dévissage de la vanne et son extraction peuvent notamment être réalisés en une seule opération, au contraire des techniques connues dans lesquelles le dévissage et l'extraction sont réalisés avec deux outils différents qui obligent parfois à des échanges fastidieux si la vanne n'est pas suffisamment dévissée.

Les caractéristiques des modes de réalisations et variantes décrits ci-dessus peuvent être combinées pour former de nouveaux modes de réalisation de l'invention dans le cadre des revendications.

## Revendications

1. Vanne (4) pour un système d'application (2) de produit de revêtement, cette vanne comprenant un corps (8) comprenant un orifice central interne (10) et une chambre (12), la vanne comprenant également un piston (24) formé par une tige (240) montée dans l'orifice central interne (10) et par une tête de piston (242) montée dans la chambre (12), la tige (240) se prolongeant hors du corps (8) et étant destinée à se déplacer dans un alésage (6) du système d'application (2) dans lequel la vanne (4) est destinée à être montée et dans lequel circule le produit de revêtement sous pression ou un autre fluide, la vanne comprenant un premier dispositif d'étanchéité (26) formé par un joint dynamique logé dans le corps (8) autour de la tige de piston (240) d'un côté de la vanne où la tige de piston se prolonge hors du corps (8), une partie (12A) de la chambre (12) étant destinée à être remplie d'un fluide de commande sous pression (F2) de manière à obtenir, à l'encontre de l'effort d'un ressort (34) logé dans le corps (8), le déplacement (F3) du piston (24), la vanne comportant un second dispositif d'étanchéité (38) formé par un joint dynamique logé dans le corps (8) autour de la tige de piston (240) entre le premier dispositif d'étanchéité (26) et la chambre (12), **caractérisée en ce que** la vanne comprend un conduit d'évent (40) prévu dans la tige du piston (240) et communicant avec l'orifice central interne (10) entre le premier dispositif d'étanchéité (26) et le deuxième dispositif d'étanchéité (38) et débouchant à l'air libre ou dans une partie (12B) de la chambre (12) communiquant avec l'air libre.

2. Vanne selon la revendication 1, **caractérisée en ce que** le conduit d'évent (40) comprend au moins un orifice radial (42) débouchant dans une cavité (44) de l'orifice central interne (10) située axialement entre le premier dispositif d'étanchéité (26) et le deuxième dispositif d'étanchéité (38).

3. Vanne selon l'une des revendications précédentes, **caractérisée en ce qu'**elle comprend un témoin (46) solidaire du piston (24) configuré pour faire saillie hors du corps (8) en fonction d'une position du piston (24), et **en ce que** le conduit d'évent (40) traverse le témoin (46).

4. Vanne selon l'une des revendications précédentes, **caractérisée en ce que** le conduit d'évent (40) est coaxial à un axe central (X) du piston (24).

5. Vanne selon l'une des revendications 1 et 2, **caractérisée en ce que** le condit d'évent (40) débouche dans la partie (12B) de la chambre (12) communiquant avec l'air libre, et dans laquelle est monté le ressort (34).

6. Vanne selon la revendication 2, **caractérisée en ce qu'**elle comprend un conduit (500) traversant le corps (8) entre une surface externe du corps (8) et la cavité (44) de l'orifice central interne (10) située axialement entre le premier dispositif d'étanchéité (26) et le deuxième dispositif d'étanchéité (38) de manière à canaliser vers le conduit d'évent (40) une fuite (F5) d'un élément d'étanchéité statique (39A) interposé entre le corps (8) et l'alésage (6).

7. Système d'application (2) d'un produit de revêtement comprenant une vanne (4) selon l'une des revendications précédentes.

## Patentansprüche

1. Ventil (4) für ein Auftragssystem (2) eines Beschichtungsprodukts, dieses Ventil umfassend einen Körper (8), der eine innere mittlere Öffnung (10) und eine Kammer (12) umfasst, das Ventil auch umfassend einen Kolben (24), der durch eine Stange (240), die in der inneren mittleren Öffnung (10) montiert ist, und durch einen Kolbenboden (242), der in der Kammer (12) montiert ist, gebildet wird, wobei sich die Stange (240) aus dem Körper (8) heraus erstreckt und dazu bestimmt ist, sich in einer Bohrung (6) des Auftragssystems (2) zu bewegen, in dem das Ventil (4) montiert werden soll und in dem das unter Druck stehende Beschichtungsprodukt oder ein anderes Fluid fließt, das Ventil umfassend eine erste Dichtungsvorrichtung (26), die durch eine dynamische Dichtung gebildet ist, die in dem Körper (8) um die Kolbenstange (240) herum auf einer Seite des Ventils aufgenommen ist, auf der sich die Kolbenstange aus dem Körper (8) heraus erstreckt, wobei ein Abschnitt (12A) der Kammer (12) dazu bestimmt ist, mit einem Steuerfluid unter Druck (F2) gefüllt zu werden, um gegen die Kraft einer in dem Körper (8) untergebrachten Feder (34) die Verschiebung (F3) des Kolbens (24) zu erlangen, wobei das Ventil eine zweite Dichtungsvorrichtung (38) umfasst, die durch eine dynamische Dichtung gebildet ist, die in dem Körper (8) um die Kolbenstange (240) herum zwischen der ersten Dichtungsvorrichtung (26) und der Kammer (12) untergebracht ist, **dadurch gekennzeichnet, dass** das Ventil einen Entlüftungskanal (40) umfasst, der in der Kolbenstange (240) bereitgestellt ist und mit der inneren mittleren Öffnung (10) zwischen der ersten Dichtungsvorrichtung (26) und der zweiten Dichtungsvorrichtung (38) in Verbindung ist und sich zur freien Luft oder in einen Abschnitt (12B) der Kammer (12) öffnet, der mit der freien Luft in Verbindung ist.

2. Ventil nach Anspruch 1, **dadurch gekennzeichnet, dass** der Entlüftungskanal (40) mindestens eine radiale Öffnung (42) umfasst, die in einen Hohlraum (44) der inneren mittleren Öffnung (10) mündet, der sich axial zwischen der ersten Dichtungsvorrichtung (26) und der zweiten Dichtungsvorrichtung (38) befindet.

3. Ventil nach einem der vorherigen Ansprüche, **dadurch gekennzeichnet, dass** es einen mit dem Kolben (24) fest verbundenen Anzeiger (46) umfasst, der konfiguriert ist, um in Abhängigkeit von einer Position des Kolbens (24) aus dem Körper (8) hervorzustehen, und dass der Entlüftungskanal (40) den Anzeiger (46) durchquert.

4. Ventil nach einem der vorherigen Ansprüche, **dadurch gekennzeichnet, dass** der Entlüftungskanal (40) koaxial zu einer Mittelachse (X) des Kolbens (24) ist.

5. Ventil nach einem der Ansprüche 1 oder 2, **dadurch gekennzeichnet, dass** der Entlüftungskanal (40) in den Abschnitt (12B) der Kammer (12) mündet, der mit der freien Luft in Verbindung ist und in dem die Feder (34) montiert ist.

6. Ventil nach Anspruch 2, **dadurch gekennzeichnet, dass** es einen Kanal (500) umfasst, der den Körper (8) zwischen einer Außenfläche des Körpers (8) und dem Hohlraum (44) der inneren mittleren Öffnung (10) durchquert, der sich axial zwischen der ersten Dichtungsvorrichtung (26) und der zweiten Dichtungsvorrichtung (38) befindet, um eine Leckage (F5) eines statischen Dichtungselements (39A), das zwischen dem Körper (8) und der Bohrung (6) eingefügt ist, zu dem Entlüftungskanal (40) zu kanalisieren.

7. System (2) zum Auftragen eines Beschichtungsprodukts, umfassend ein Ventil (4) nach einem der vorherigen Ansprüche.

## Claims

1. A valve (4) for a system (2) for the application of a coating product, this valve comprising a body (8) comprising an inner central orifice (10) and a chamber (12), the valve also comprising a piston (24) formed by a rod (240) mounted in the inner central orifice (10) and by a piston head (242) mounted in the chamber (12), the rod (240) extending outside the body (8) and being intended to move in a bore (6) of the application system (2) in which the valve (4) is intended to be mounted and in which the pressurized coating product or another fluid circulates, the valve comprising a first sealing device (26) formed by a dynamic seal housed in the body (8) around the piston rod (240) on one side of the valve where the piston rod extends outside the body (8), a part (12A) of the chamber (12) being intended to be filled with a pressurized control fluid (F2) so as to obtain the movement (F3) of the piston (24) against the force of a spring (34) housed in the body (8), the valve including a second sealing device (38) formed by a dynamic seal housed in the body (8) around the piston rod (240) between the first sealing device (26) and the chamber (12), **characterized in that** the valve comprises a vent duct (40) provided in the rod of the piston (240) and communicating with the inner central orifice (10) between the first sealing device (26) and the second sealing device (38) and emerging in the open air or in part (12B) of the chamber (12) communicating with the open air.

2. The valve according to claim 1, **characterized in that** the vent duct (40) comprises at least one radial orifice (42) emerging in a cavity (44) of the inner central orifice (10) located axially between the first sealing device (26) and the second sealing device (38).

3. The valve according to one of the preceding claims, **characterized in that** it comprises an indicator (46) secured to the piston (24) configured to protrude outside the body (8) based on a position of the piston (24), and **in that** the vent duct (40) passes through the indicator (46).

4. The valve according to one of the preceding claims, **characterized in that** the vent duct (40) is coaxial to the central axis (X) of the piston (24).

5. The valve according to one of claims 1 and 2, **characterized in that** the vent duct (40) emerges in the part (12B) of the chamber (12) communicating with the open air, and in which the spring is mounted (34).

6. The valve according to claim 2, **characterized in that** it comprises a duct (500) passing through the body (8) between an outer surface of the body (8) and the cavity (44) of the inner central orifice (10) located axially between the first sealing device (26) and the second sealing device (38) so as to channel, toward the vent duct (40), a leak (F5) from a static sealing element (39A) inserted between the body (8) and the bore (6).

7. An application system (2) of a coating product comprising a valve (4) according to one of the preceding claims.
